# EUROPÄISCHE PATENTSCHRIFT

(11) **EP 1 905 291 B1**
(45) Veröffentlichungstag und Bekanntmachung des Hinweises auf die Patenterteilung: **22.12.2010**
(21) Anmeldenummer: 07111402.9
(22) Anmeldetag: 29.06.2007
(51) Int. Cl.: A01D 41/127, A01F 29/00, A01D 41/12

(54) **Antriebseinrichtung für Mähdrescher**
Drive device for a combine harvester
Dispositif d'entraînement pour moissonneuse-batteuse

(30) Priorität: 26.09.2006 DE 102006045789
(43) Veröffentlichungstag der Anmeldung: 02.04.2008
(73) Patentinhaber: CLAAS Selbstfahrende Erntemaschinen GmbH, 33428 Harsewinkel (DE)
(72) Erfinder: Buchmann, Norbert, 33428, Harsewinkel (DE)

(56) Entgegenhaltungen:
- EP-A- 0 117 592
- EP-A- 0 291 336
- EP-A- 0 777 960
- EP-A- 1 680 952
- DE-A1- 4 344 649
- US-A- 4 056 107
- US-A- 5 855 108

## Beschreibung

Die Erfindung bezieht sich auf einen Mähdrescher mit einer Antriebseinrichtung, mit einem oder mehreren längs zur Fahrtrichtung angeordneten Trennrotoren und einem unterhalb des Abgabebereiches der Trennrotoren angeordneten Strohhäcksler, nach dem Oberbegriff des Patentanspruchs 1.

Die einzelnen Arbeitsorgane eines Mähdreschers werden überwiegend durch Riementriebe angetrieben, die entsprechend den funktionellen Erfordernissen an den Seitenwänden angeordnet sind. Derartige Antriebseinrichtungen sind bereits in verschiedenen Ausführungen und Anordnungen bekannt. So ist beispielsweise in der EP 0 777 960 A2 ein Antriebsschema dargestellt (Fig. 2), bei dem der Trennrotor und der Strohhäcksler über jeweils separate und voneinander unabhängige Riemengetriebe angetrieben werden. Die Riemengetriebe sind dabei getrennt voneinander auf jeweils der gegenüberliegenden Seitenwand angeordnet und werden ihrerseits über ein vom Antriebsmotor aus angetriebenes Vorgelege angetrieben. Eine derartige Antriebsanordnung erfordert neben einem erhöhten Herstellungsaufwand vor allem auch einen größeren Bauraumbedarf im Bereich der Seitenwände. Außerdem hat der separate Häckslerantrieb eine ungünstige lange Nachlaufzeit beim Abschalten des Strohhäckslers zur Folge.

In der US- Patentschrift 5 855 108 ist ein landwirtschaftliches Fahrzeug bzw. ein Mähdrescher offenbart. Diese Druckschrift ist zwar im Wesentlichen darauf gerichtet, wie ein Alarmsignal bei einem Riemenschlupf bei diesem Mähdrescher gebildet werden kann, wenn es um den Antrieb eines Aggregates, wie einen Trennrotor geht. Aus dieser Druckschrift geht auch hervor, dass ein Riemengetriebesystem die Antriebsmaschine mit einem Arbeitsorgan des Mähdreschers, wie zum Beispiel den längs zur Fahrtrichtung angeordneten Trennrotor, getrieblich verbindet. Die Riemengetriebe sind jedoch nicht an einer Seitenwand des Mähdreschers angeordnet.

Der Erfindung liegt die Aufgabe zugrunde, einen Mähdrescher mit einer Antriebseinrichtung für die Trennrotoren und den Strohhäcksler so auszuführen und die Antriebseinrichtung so anzuordnen, dass eine platzsparende und kostengünstige Bauweise erreicht sowie ein schneller Stillstand des Strohhäckslers nach dem Abschalten erreicht wird.

Diese Aufgabe wird durch die im Patentanspruch 1 genannten kennzeichnenden Merkmale gelöst.

Weitere vorteilhafte Ausführungen des Erfindungsgegenstandes ergeben sich aus den nachgeordneten Ansprüchen.

Die erfindungsgemäße Lösung ermöglicht sowohl Herstellungs- als auch funktionelle Vorteile. Da die gemeinsamen Riementriebe für den Antrieb der Trennrotoren und des Strohhäckslers an einer Seitenwand des Mähdreschers angeordnet sind, besteht an der gegenüberliegenden Seitenwand ein uneingeschränktes Raumangebot für andere anzutreibende Baugruppen. Durch den Wegfall bisher erforderlicher zusätzlicher Wellen, Riemenscheiben und Keilriemen wird der notwendig Bauaufwand wesentlich reduziert. Beim Auskuppeln des Antriebes für die Trennrotoren und den Strohhäcksler wird der auslaufende Strohhäcksler durch die Trennrotoren abgebremst und dadurch die Nachlaufzeit verringert. Dieser vorteilhafte Effekt wird noch dadurch unterstützt, dass der Strohhäcksler eine Arbeitsdrehzahl aufweist, die mindestens doppelt so hoch wie die Nenndrehzahl der Trennrotoren ist und die Summe der Massenträgheitsmomente der Trennrotoren größer als die des Strohhäckslers ist.

Die Erfindung wird nachstehend an einem Ausführungsbeispiel näher erläutert. In der zugehörigen Zeichnung zeigen
- Figur 1: einen Längsschnitt durch einen selbstfahrenden Mähdrescher 1 mit angetriebenen Vorderrädern 2, lenkbaren Hinterrädern 3 sowie mit einer Fahrerkabine 4
- Figur 2: den Bereich der Antriebseinrichtung für die Trennrotoren und den Strohhäcksler in einem größeren Maßstab.

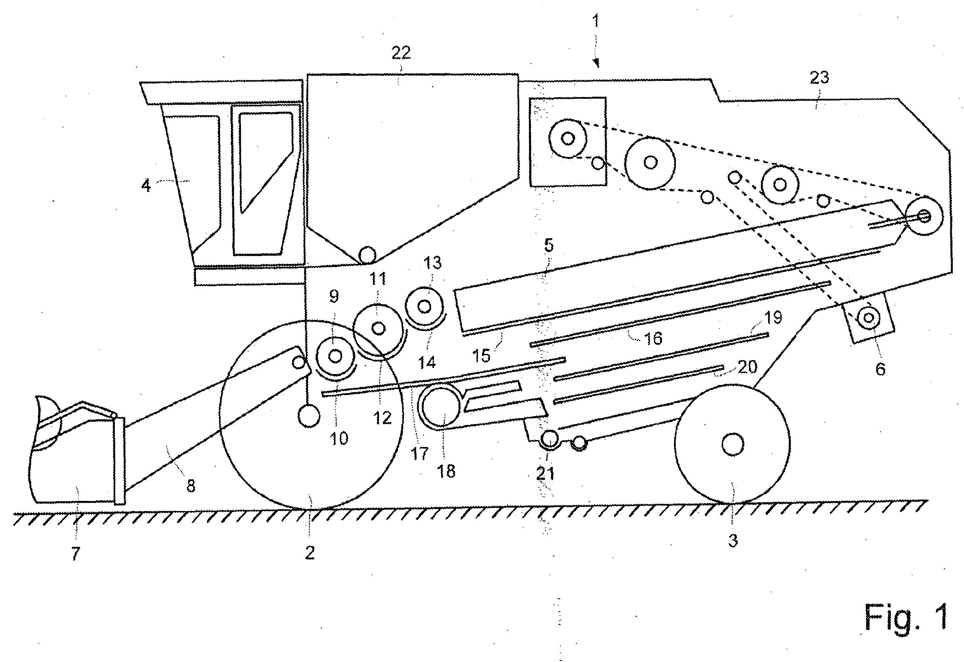

Der in der Fig. 1 schematisch dargestellte Mähdrescher 1 mit angetriebenen Vorderrädern 2, lenkbaren Hinterrädern 3 sowie mit einer Fahrerkabine 4 weist eine quer zur Fahrtrichtung angeordnete, nach dem Tangentialprinzip arbeitende Drescheinrichtung sowie nachgeordnete, sich in Längsrichtung des Mähdreschers 1 erstreckende Trennrotoren 5 und einen unterhalb des Abgabebereiches der Trennrotoren 5 angeordneten Strohhäcksler 6 auf.

Das vom Schneidwerk 7 abgeschnittene Erntegut gelangt über einen Einzugskanal 8 zunächst zu einer Beschleunigungstrommel 9 mit einem darunter angeordneten Abscheidekorb 10 und danach zur Dreschtrommel 11 mit einem mitwirkenden Dreschkorb 12. Über eine Wendetrommel 13 und einen zugeordneten Trennkorb 14 wird das Restkorn-Stroh-Gemisch zwei nebeneinander angeordneten Trennrotoren 5 zugeführt, die zylindrisch ausgebildet und in Förderrichtung ansteigend verlaufen. Die am Umfang der Trennrotoren 5 schraubenförmig angebrachten Förderelemente unterstützen dabei die Förderbewegung des Erntegutes und den Abscheidevorgang an den unterhalb der Trennrotoren 5 angeordneten Abscheiderosten 15. An den Abscheiderosten 15 werden die im Erntegutgemisch enthaltenen Körner sowie Anteile von Kurzstroh und Spreu abgeschieden und über den darunter schwingbar angeordneten Rücklaufboden 16 zur Reinigungseinrichtung gefördert. Gemeinsam mit den an der Drescheinrichtung abgeschiedenen Erntegutbestandteilen, die über einen Förderboden 17 der Reinigungseinrichtung zugeführt werden, erfolgt in dieser mittels eines von einem Gebläse 18 erzeugten Luftstromes und eines Ober- und Untersiebes 19,20 der Reinigungsprozess der Körner. Die gereinigten Körner gelangen über eine Förderschnecke 21 und einen Elevator in den Korntank 22. Spreu und Kurzstrohbestandteile werden durch den Luftstrom nach hinten aus dem Mähdrescher 1 gefördert und auf dem Feldboden abgelegt. Das von den Trennrotoren 5 in Richtung zum Abgabebereich geförderte Stroh gelangt von dort aus in den Strohhäcksler 6, der quer zur Fahrtrichtung an einem Rahmen unterhalb der Strohauslaufhaube 23 befestigt ist. Die mit einer hohen Drehzahl angetriebene Welle des Strohhäckslers 6 ist in Lagern an den Seitenwänden gelagert. Dem Strohhäcksler 6 ist in der Abwurfrichtung eine mit feststehenden oder rotierenden Verteilelementen versehene Verteilvorrichtung für das gehäckselte Stroh auf dem Feldboden zugeordnet.

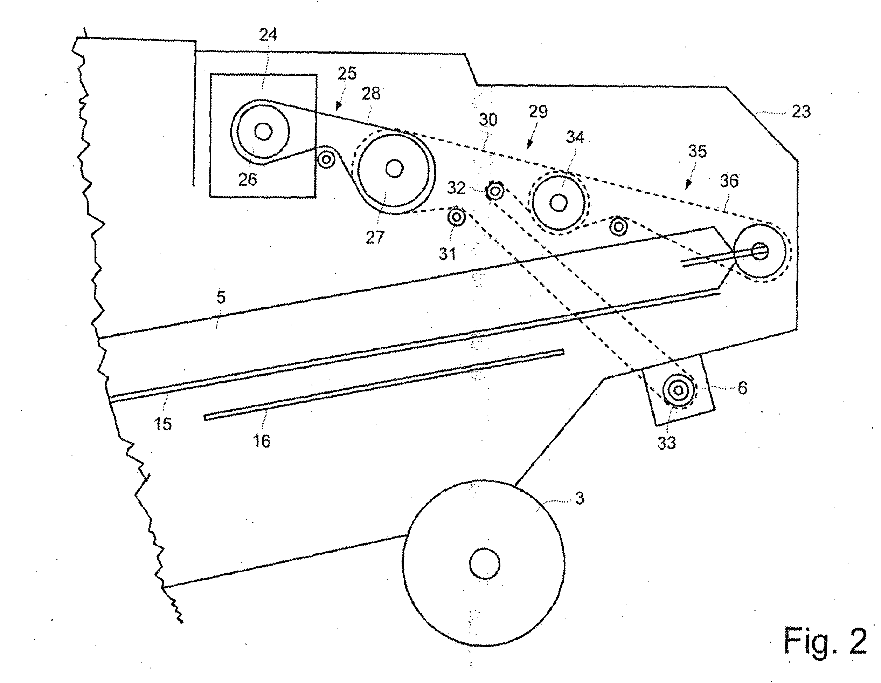

Der Antrieb der Trennrotoren 5 und des Strohhäckslers 6 erfolgt über ein in der Fig. 2 im Detail dargestelltes Antriebssystem mit mehreren als Riemengetriebe ausgeführtes Umschlingungsgetrieben, die gemeinsam an einer Seitenwand des Mähdreschers 1 angeordnet sind. Vom Antriebsmotor 24 des Mähdreschers 1 wird zunächst ein erstes Riemengetriebe 25 mit der Antriebsscheibe 26 und der Abtriebsscheibe 27 angetrieben. Der Antriebsriemen 28 ist durch eine Volllinie dargestellt. Das zweite Riemengetriebe 29 treibt über die Umlenkscheiben 31,32 die Antriebsscheibe 33 des Strohhäckslers 6 sowie über die Abtriebsscheibe 34 ein drittes Riemengetriebe 35 an, das dem Antrieb der Trennrotoren dient. Der Antriebsriemen 36 des dritten Riemengetriebes 35 ist mit einer Strich-Punk-Linie dargestellt. Der Antrieb des ersten Riemengetriebes 25 ist durch eine Kupplung unterbrechbar. Dadurch wird beim Auskuppeln sowohl der Antrieb des Strohhäckslers 6 als auch der Trennrotoren 5 unterbrochen, so dass beide Einrichtungen gemeinsam ein- bzw. ausgeschaltet werden können. Außerdem ist der Antrieb des Strohhäckslers 6 durch eine im Antriebsbereich der Welle des Strohhäckslers 6 angeordnete, in der Zeichnung nicht dargestellte, Kupplung zusätzlich ein- bzw. auskuppelbar. Dadurch ist der Strohhäcksler 6 unabhängig von den Trennrotoren 5 ausschaltbar. Dies ist dann von Bedeutung, wenn das die Trennrotoren 5 verlassende Stroh nicht gehäckselt werden soll.

### Bezugszeichenliste:

- 1: Mähdrescher
- 2: Vorderräder
- 3: Hinterräder
- 4: Fahrerkabine
- 5: Trennrotoren
- 6: Strohhäcksler
- 7: Schneidwerk
- 8: Einzugskanal
- 9: Beschleunigungstrommel
- 10: Abscheidekorb
- 11: Dreschtrommel
- 12: Dreschkorb
- 13: Wendetrommel
- 14: Trennkorb
- 15: Abscheideroste
- 16: Rücklaufboden
- 17: Förderboden
- 18: Gebläse
- 19: Obersieb
- 20: Untersieb
- 21: Förderschnecke
- 22: Korntank
- 23: Strohauslaufhaube
- 24: Antriebsmotor
- 25: Erstes Riemengetriebe
- 26: Antriebsscheibe
- 27: Abtriebsscheibe
- 28: Antriebsscheibe
- 29: Zweites Riemengetriebe
- 30: Antriebsriemen
- 31,32: Umlenkscheiben
- 33: Antriebsscheibe
- 34: Abtriebsscheibe
- 35: drittes Riemengetriebe
- 36: Antriebsriemen

## Patentansprüche

1. Mähdrescher mit einer Antriebseinrichtung, mit einem oder mehreren längs zur Fahrtrichtung angeordneten Trennrotoren und einem unterhalb des Abgabebereiches der Trennrotoren quer zur Fahrtrichtung angeordneten Strohhäcksler, wobei die Antriebsübertragung über Umschlingungsgetriebe (25, 29, 35) erfolgt,
**dadurch gekennzeichnet,**
**dass** die Trennrotoren (5) und der Strohhäcksler (6) über wenigstens ein Umschlingungsgetriebe (25, 29, 35) in kuppelbarer Weise gemeinsam antreibbar sind, sowie dass die Umschlingungsgetriebe (25, 29, 35) gemeinsam an einer Seitenwand des Mähdreschers (1) angeordnet sind.

2. Mähdrescher mit einer Antriebseinrichtung nach Anspruch 1,
**dadurch gekennzeichnet,**
**dass** über ein erstes kuppelbares Riemengetriebe (25) ein zweites, mit der Antriebsscheibe (33) des Strohhäckslers (6) verbundenen Riemengetriebe (29) antreibbar ist, dessen Abtriebsscheibe (34) mit einem dritten Riemengetriebe (35) für den Antrieb der Trennrotoren (5) verbunden ist.

3. Mähdrescher mit einer Antriebseinrichtung nach einem der vorhergehenden Ansprüche, **dadurch gekennzeichnet,**
**dass** der Antrieb des Strohhäckslers (6) durch eine im Antriebsbereich der Welle des Strohhäckslers (6) angeordnete Kupplung zusätzlich ein- bzw. auskuppelbar ist.

4. Mähdrescher mit einer Antriebseinrichtung nach einem der vorhergehenden Ansprüche, **dadurch gekennzeichnet,**
**dass** das Trägheitsmoment des oder der Trennrotoren (5) größer als das Trägheitsmoment des Strohhäckslers (6) ist.

5. Mähdrescher mit einer Antriebseinrichtung nach einem der vorhergehenden Ansprüche, **dadurch gekennzeichnet,**
**dass** die Drehzahl des Stohhäckslers (6) bei zugeschaltetem Antrieb (24, 25) über der Drehzahl des oder der Trennrotoren (5) liegt und vorzugsweise doppelt so hoch ist.

6. Mähdrescher mit einer Antriebseinrichtung nach einem der vorhergehenden Ansprüche, **dadurch gekennzeichnet,**
**dass** die Umschlingungsgetriebe als Riemengetriebe (25, 29, 35) ausgeführt sind.

## Claims

1. A combine harvester having a drive device, one or more separating rotors arranged longitudinally relative to the direction of travel, and a straw chopper arranged transversely to the direction of travel below the discharge region of the separating rotors, wherein the transmission of drive is effected by way of wrap-around transmissions (25, 29, 35),
**characterised in that**
the separating rotors (5) and the straw chopper (6) are jointly drivable in coupleable relationship by way of at least one wrap-around transmission (25, 29, 35), and the wrap-around transmission (25, 29, 35) is arranged jointly at a side wall of the combine, harvester (1).

2. A combine harvester having a drive device according to claim 1 **characterised in that** drivable by way of a first coupleable belt transmission (25) is a second belt transmission (29) which is connected to the drive pulley (33) of the straw chopper (6) and whose driven pulley (34) is connected to a third belt transmission (35) for the drive of the separating rotors (5).

3. A combine harvester having a drive device according to one of the preceding claims **characterised in that** the drive of the straw chopper (6) can additionally be connected and disconnected by way of a coupling arranged in the drive region of the shaft of the straw chopper (6).

4. A combing harvester having a drive device according to one of the preceding claims **characterised in that** the moment of inertia of the separating rotor or rotors (5) is greater than the moment of inertia of the straw chopper (6).

5. A combine harvester having a drive device according to one of the preceding claims **characterised in that** the rotary speed of the straw chopper (6) when the drive (24, 25) is switched on is above the rotary speed of the separating rotor or rotors (5) and is preferably twice as high.

6. A combine harvester having a drive device according to one of the preceding claims **characterised in that** the wrap-around transmissions are in the form of belt transmissions (25, 29, 35).

## Revendications

1. Moissonneuse-batteuse avec un dispositif d'entraînement comprenant un ou plusieurs rotors séparateurs agencés le long du sens de marche et un hache-paille agencé perpendiculairement au sens de marche en dessous de la zone d'éjection des rotors séparateurs, la transmission de la force d'entraînement ayant lieu par l'intermédiaire de transmissions à variation continue (25, 29, 35),
**caractérisée en ce que**
les rotors séparateurs (5) et le hache-paille (6) peuvent être entraînés collectivement par l'intermédiaire d'au moins une transmission à variation continue (25, 29, 35), avec une possibilité de couplage, et les transmissions variation continue (25 29, 35) sont agencées collectivement au niveau d'une paroi latérale de la moissonneuse-batteuse (1).

2. Moissonneuse-batteuse avec un dispositif d'entraînement selon la revendication 1,
**caractérisée en ce que**
une première transmission à courroie (25) couplable peut entraîner une deuxième transmission à courroie (29) reliée à la poulie d'entraînement (33) du hache-paille (6), la poulie entraînée (34) de ladite deuxième transmission à courroie étant reliée à une troisième transmission à courroie (35) pour l'entraînement des rotors séparateurs (5).

3. Moissonneuse-batteuse avec un dispositif d'entraînement selon l'une quelconque des revendications précédentes, **caractérisée en ce que**
l'entraînement du hache-paille (6) peut de manière supplémentaire être couplé ou découplé grâce à un couplage agencé dans la zone d'entraînement de l'arbre du hache-paille (6).

4. Moissonneuse-batteuse avec un dispositif d'entraînement selon l'une quelconque des revendications précédentes, **caractérisée en ce que**
le moment d'inertie du ou des rotors séparateurs (5) est supérieur au moment d'inertie du' hache-paille (6).

5. Moissonneuse-batteuse avec un dispositif d'entraînement selon l'une quelconque des revendications précédentes, **caractérisée en ce que**
la vitesse de rotation du hache-paille (6), lorsque l'entraînement (24, 25) est mis en marche, est supérieure à la vitesse de rotation du ou des rotors séparateurs (5) et représente de préférence le double de celle-ci.

6. Moissonneuse-batteuse avec un dispositif d'entraînement selon l'une quelconque des revendications précédentes, **caractérisée en ce que**
les transmissions à variation continue sont réalisées sous la forme de transmissions à courroie (25, 29, 35).
